# EUROPEAN PATENT APPLICATION

(11) **EP 4 095 215 A1**
(43) Date of publication of application: **30.11.2022**
(21) Application number: 21743948.8
(22) Date of filing: 19.01.2021
(51) Int. Cl.: C09K 11/00, C09K 11/08, C09K 11/67, G01T 1/20, G01T 1/202

(54) **SCINTILLATOR AND RADIATION DETECTOR**

(30) Priority: 20.01.2020 JP 2020006732
(71) Applicant: Mitsubishi Chemical Corporation, Chiyoda-ku Tokyo 100-8251 (JP); Tohoku University, Sendai-shi, Miyagi 980-8577 (JP)
(72) Inventor: HAZU, Koji, Tokyo 100-8251 (JP); HORIBE, Kentaro, Tokyo 100-8251 (JP); YAMAHARA, Keiji, Tokyo 100-8251 (JP); KUROSAWA, Shunsuke, Sendai-shi, Miyagi 980-8577 (JP); YOSHIKAWA, Akira, Sendai-shi, Miyagi 980-8577 (JP)
(74) Representative: Hoffmann Eitle
(86) International application number: PCT/JP2021/001641
(87) International publication number: WO 2021/149670

(57) **Abstract**

An object of the present invention is to provide a scintillator having a high radiation stopping power, and having a shorter fluorescence decay time compared to conventional scintillators. The above object is achieved by setting the composition of a scintillator to a composition represented by General Formula (1). QₓM_{y}O_{3z} ... (1) (wherein in General Formula (1), Q includes at least two or more divalent metallic elements; M includes at least Hf; and x, y, and z independently satisfy 0.5 ≤ x ≤ 1.5, 0.5 ≤ y ≤ 1.5, and 0.7 ≤ z ≤ 1.5, respectively).

## Description

### TECHNICAL FIELD

The present invention relates to a scintillator use in a high-count radiation detector such as a positron emission tomography (PET) apparatus, which is used for a scintillation detector for a radiation such as γ-ray.

### BACKGROUND ART

Known representative examples of scintillators for detection of radiation include Lu₂SiO₅, Ga₃(Ga,Al)₅O₁₂, and Gd₂Si₂O₇. In the research and development in this field, improvement of scintillator properties has been attempted based on the structures of these compounds using, for example, a method in which a base atom is replaced with an atom of the same group, or a method in which co-doping with an impurity atom having a valence different from that of the luminescence center atom is carried out (Patent Documents 1 to 3).

Silicon photomultipliers have been widely used in recent years, and scintillators having a short fluorescence decay time (DT) are demanded from the viewpoint of improvement of the spatial resolution on the basis of the time resolution. For example, it has been reported that, by the use of a lutetium orthosilicate scintillator doped with Ca, a DT of about 30 to 40 ns can be achieved (Patent Document 2).

Further, hafnate scintillators such as SrHfO₃ and BaHfO₃ have been reported as scintillators showing even shorter DTs (Non-patent Documents 1 and 2). Since these scintillators contain an element having a high atomic number such as Lu or Hf, their effective atomic numbers are as high as 63 to 64, and moreover, their densities are as high as 7.5 g/cm³ or more. Therefore, they have a high radiation stopping power. Moreover, since these scintillators are not deliquescent, they can be easily handled.

Other examples of scintillators having very short DTs that have been reported so far include Cs₂ZnCl₄ (Patent Document 4 and Non-patent Document 3) and Ce-doped LaBr₃ (Non-patent Document 4). However, both of these scintillators Cs₂ZnCl₄ and LaBr₃ have an effective atomic number of as low as 48, and their densities are as low as about 3 g/cm³ and 5.3 g/cm³, respectively. Therefore, they have a low radiation stopping power. Furthermore, halide scintillators such as LaBr₃ are often deliquescent, and hence cannot be easily handled.

### PRIOR ART DOCUMENTS

### PATENT DOCUMENT

Patent Document 1: JP 5674385 B
Patent Document 2: JP 2016-56378 A
Patent Document 3: JP 2015-151535 A
Patent Document 4: JP 2014-13216 A

### NON-PATENT DOCUMENT

Non-patent Document 1: Scintillation Properties of SrHfO3: Ce3+ and BaHfO3: Ce3+ Ceramics, E. V. van Loef, W. M. Higgins, J. Glodo, C. Brecher, A. Lempicki, V. Venkataramani, W. W. Moses, S. E. Derenzo, and K. S. Shah, IEEE Transactions on Nuclear Science, 54, 741-743 (2007).
Non-patent Document 2: BaHfO3:Ce sintered ceramic scintillators, A. Grezer, E. Zych, and L. Lepinski, Radiation Measurements, 45, 386-388 (2010).
Non-patent Document 3: X-ray detection capability of a Cs2ZnCl4 single-crystal scintillator, Natsuna Yahaba, Masanori Koshimizu, Yan Sun, Takayuki Yanagida, Yutaka Fujimoto, Rie Haruki, Fumihiko Nishikido, Shunji Kishimoto, and Keisuke Asai, Applied Physics Express, 7, 062602 (2014).
Non-patent Document 4: E. V. D. van Loef, P. Dorenbos, C. W. E. van Eijk, K. W. Kr.amer, H. U. G.udel, Nuclear Instruments and Methods in Physics Research A, 486, 254-258 (2002).

### SUMMARY OF THE INVENTION

### PROBLEMS TO BE SOLVED BY THE INVENTION

Since the other scintillators having sufficiently short DTs that have been conventionally reported have a low radiation stopping power, improvement of the radiation stopping power has been demanded. On the other hand, conventional scintillators having a high radiation stopping power have DTs of about 15 to 20 ns even when they have short DTs, so that scintillators having even shorter DTs have been demanded. Accordingly, an object to be achieved by the present invention is to provide a scintillator having a high radiation stopping power, and having a shorter fluorescence decay time compared to conventional scintillators.

### MEANS FOR SOLVING THE PROBLEMS

As a result of intensive study in view of the problems described above, the present inventors discovered that the problems can be solved based on an unexpected effect that enables production of a scintillator having a high radiation stopping power and a very short fluorescence decay time by the use of a hafnate scintillator containing at least two or more divalent metallic elements, thereby completing the present invention.

More specifically, the present invention preferably includes the following.
[1] A scintillator represented by General Formula (1):

   QₓM_{y}O_{3z} ... (1)

   wherein in General Formula (1), Q comprises at least two or more divalent metallic elements; M comprises at least Hf; and x, y, and z independently satisfy 0.5 < x < 1.5, 0.5 < y < 1.5, and 0.7 ≤ z ≤ 1.5, respectively.
[2] The scintillator according to [1], wherein Q comprises one or more elements selected from Ba, Sr, and Ca.
[3] The scintillator according to [1], wherein Q comprises at least Ba.
[4] The scintillator according to [1] or [2], wherein Q comprises two or more elements selected from Ba, Sr, and Ca.
[5] The scintillator according to [1], wherein Q comprises two divalent metallic elements Q1 and Q2, and wherein the molar ratio between Q1 and Q2 is within the range of 20:80 to 80:20.
[6] The scintillator according to [1], wherein Q comprises one or more selected from the group consisting of Ba, Ca, and Sr, and wherein the total ratio of Ba, Ca, and Sr in the total of Q is 50 mol% or more.
[7] The scintillator according to any one of [1] to [6], wherein the ratio of Hf in the total of M is 40 mol% or more.
[8] The scintillator according to any one of [1] to [7], wherein the scintillator further comprises one or more elements selected from the group consisting of Ce, Pr, Nd, Eu, Tb, and Yb as an activator(s) .
[9] The scintillator according to any one of [1] to [8], wherein the scintillator is a single crystal or a block of a sintered body.
[10] The scintillator according to any one of [1] to [9], wherein the scintillator has a columnar shape, flat plate shape, or curved plate shape, and has a height of 1 mm or more.
[11] The scintillator according to any one of [1] to [10], wherein the scintillator has a fluorescence decay time of 14 ns or less.
[12] The scintillator according to any one of [1] to [11], wherein the scintillator has a fluorescence decay time of 11 ns or less.
[13] The scintillator according to any one of [1] to [12], wherein, upon irradiation with γ-ray, the fluorescence intensity 100 ns after the time when the fluorescence intensity reaches the maximum value is 3% or less when the maximum value of fluorescence intensity is taken as 100%.
[14] A radiation detector, comprising the scintillator according to any one of [1] to [13].
[15] A radiation inspection apparatus comprising a radiation detector,
   wherein the radiation detector comprises the scintillator according to any one of [1] to [13].
[16] A method of producing a scintillator, comprising:
   a raw material mixing step of mixing raw materials to obtain a raw material mixture; and
   a synthesis step of subjecting the raw material mixture to heat treatment to obtain a synthetic powder;
   wherein the raw materials comprise at least HfO₂ having a purity of 99.0 mol% or more, and
   wherein the scintillator is a scintillator represented by General Formula (1):

      QₓM_{y}O_{3z} ... (1)
   wherein in General Formula (1), Q comprises at least two or more divalent metallic elements; M comprises at least Hf; and x, y, and z independently satisfy 0.5 ≤ x ≤ 1.5, 0.5 ≤ y ≤ 1.5, and 0.7 ≤ z ≤ 1.5, respectively.
[17] The method of producing the scintillator according to [16], further comprising:
   a pressure molding step of pressure-molding the synthetic powder to obtain a pressure-molded body; and
   a firing step of firing the pressure-molded body to obtain a fired product.
[18] The method of producing the scintillator according to [16], further comprising:
   a pressure molding step of pressure-molding the synthetic powder to obtain a pressure-molded body;
   a firing step of firing the pressure-molded body to obtain a fired product; and
   an annealing step of annealing the fired product after the firing step.

### ADVANTAGEOUS EFFECTS OF INVENTION

The present invention can provide a scintillator having a high radiation stopping power, and having a shorter fluorescence decay time compared to conventional scintillators.

Further, by using an inexpensive low-purity Hf raw material, the present invention can provide a scintillator whose production cost is low, the scintillator having a high radiation stopping power, and having a shorter fluorescence decay time compared to conventional scintillators.

### BRIEF DESCRIPTION OF THE DRAWINGS

Fig. 1 is a diagram illustrating a fluorescence decay waveform of the scintillator of Example 1.
Fig. 2 is a diagram illustrating a fluorescence decay waveform of the scintillator of Example 2.
Fig. 3 is a diagram illustrating a fluorescence decay waveform of the scintillator of Example 3.

### MODE FOR CARRYING OUT THE INVENTION

Embodiments of the present invention are described below in detail. These descriptions are examples (representative examples) of embodiments of the present invention, and the present invention is not limited by those contents as long as the spirit of the present invention is not spoiled.

In the present description, the numerical range expressed using "... to ..." means the range including the values described before and after "to" as the lower limit and the upper limit, respectively. Thus, "A to B" means a value (s) of A or more and B or less.

### <Scintillator>

A scintillator as one embodiment of the present invention (which may also be hereinafter simply referred to as "scintillator") is represented by the following General Formula (1) :

QₓM_{y}O_{3z} ... (1)

(wherein in General Formula (1), Q includes at least two or more divalent metallic elements; M includes at least Hf; and x, y, and z independently satisfy 0.5 < x < 1.5, 0.5 < y < 1.5, and 0.7 < z < 1.3, respectively).

The scintillator preferably has a perovskite-type crystal structure.

Q in General Formula (1) is not limited as long as it is at least two or more divalent metallic elements, and each element may be a typical metal element or transition metal element. Preferred examples of the divalent metallic elements include alkaline earth metal elements (Be, Mg, Ca, Sr, Ba, and Ra). Q preferably includes one or more, or two or more elements selected from Ba, Ca, and Sr, among the alkaline earth metal elements.

In cases where Q includes one or more selected from the group consisting of Ba, Ca, and Sr, the total ratio of Ba, Ca, and Sr in the total of Q is usually 10 mol% or more, preferably 20 mol% or more, more preferably 30 mol% or more, still more preferably 40 mol% or more, especially preferably 50 mol% or more, still especially preferably 60% or more, and most preferably 80 mol% or more. Regarding the upper limit, the ratio is 100 mol% or less.

From the viewpoint of reducing the fluorescence decay time, Q preferably includes at least Ba.

In cases where Q includes Ba, the ratio of Ba in the total of Q in terms of the number of moles is usually 0.01 mol% or more, preferably 10 mol% or more, more preferably 20 mol% or more, still more preferably 30 mol% or more, and most preferably 40 mol% or more. The ratio of Ba in the total of Q in terms of the number of moles is usually less than 99.99 mol%, preferably 90 mol% or less, or may be 80 mol% or less, or 70 mol% or less.

In cases where Q includes two divalent metallic elements Q1 and Q2, Q1:Q2 (molar ratio) is usually within the range of 0.01:99.99 to 99.99:0.01, preferably within the range of 10:90 to 95:5, more preferably within the range of 20:80 to 80:20, still more preferably within the range of 30:70 to 70:30, especially preferably within the range of 40:60 to 60:40.

In cases where Q includes three or more divalent metallic elements, the number of moles of each element, when the total of Q is taken as 100%, is usually 0.01% or more, preferably 10% or more, more preferably 20% or more, or may be 30% or more, independently within the range in which the total does not exceed 100%. Further, the number of moles of each element, when the total of Q is taken as 100%, is usually 99.99% or less, preferably 90% or less, more preferably 80% or less, or may be 70% or less, independently within the range in which the total does not exceed 100%.

By appropriately controlling the types and the ratios of Q, a scintillator showing a very short fluorescence decay time can be obtained.

M in General Formula (1) is not limited as long as it includes at least Hf. M is preferably a metallic element(s) other than Q, and more preferably Hf.

The ratio of Hf in the total of M is not limited. The ratio is usually 10 mol% or more, preferably 20 mol% or more, more preferably 30 mol% or more, still more preferably 40 mol% or more, especially preferably 60 mol% or more, and most preferably 80 mol% or more. Regarding the upper limit, the ratio is 100% or less. In cases where M includes Hf at a sufficient ratio, a high effective atomic number can be achieved, so that a scintillator having a high radiation stopping power can be obtained.

The scintillator represented by General Formula (1) may contain Zr as an impurity. Zr may be present in any mode in the scintillator. For example, similarly to an activator as described later, Zr may be included in one of Q and M, or may be included in both of Q and M. In other words, one or both of Q and M may include a site substituted with Zr.

The Zr content in the scintillator is usually 100 ppm by mass to 50, 000 ppm by mass. The Zr content is preferably 1,500 ppm by mass or more, more preferably 1,800 ppm by mass or more, still more preferably 2,000 ppm by mass or more, especially preferably 4,500 ppm by mass or more, and is preferably 21,000 ppm by mass or less, more preferably 18,000 ppm by mass or less, still more preferably 15,000 ppm by mass or less, especially preferably 12,000 ppm by mass or less, still especially preferably 8,000 ppm by mass or less, most preferably 5,000 ppm by mass or less. In cases where the Zr content is the lower limit or more, a scintillator having a good afterglow property and good light transmittance can be easily obtained. Further, in cases where the Zr content the upper limit or less, the afterglow intensity derived from Zr is not too high, and an appropriate afterglow property can be obtained

The Zr content can be adjusted by controlling the amount of Zr (or a Zr compound) that may be added as a raw material. In cases where Zr is contained as an impurity in a raw material other than the Zr (or the Zr compound), the content may be adjusted by selecting the raw material from the viewpoint of the impurity content, or by combination of the selection of the amount of the Zr (or the Zr compound) added and the selection of the raw material.

The Zr content in the scintillator is not necessarily the same as the content in the total raw materials blended, and may be concentrated or may decrease during the production process. Nevertheless, the Zr content in the scintillator reflects the Zr content in the total raw materials to be blended, so that it increases or decreases in accordance with the Zr content in the total raw materials blended. A scintillator containing Zr within a preferred range can be obtained by appropriately controlling the raw material ratio, the ratio of each element upon the blending of the raw materials, addition of a Zr compound, and conditions in the production method.

From the viewpoint of reduction of the fluorescence decay time, x in General Formula (1) satisfies 0.5 < x < 1.5, preferably satisfies 0.7 < x, more preferably satisfies 0.9 < x, and preferably satisfies x ≤ 1.3, more preferably satisfies x ≤ 1.1.

From the viewpoint of reduction of the fluorescence decay time, y in General Formula (1) satisfies 0.5 ≤ y ≤ 1.5, preferably satisfies 0.7 ≤ y, more preferably satisfies 0.8 ≤ y, and preferably satisfies y ≤ 1.3, more preferably satisfies y ≤ 1.1.

From the viewpoint of reduction of the fluorescence decay time, z in General Formula (1) satisfies 0.7 ≤ z ≤ 1.5, preferably satisfies 0.8 ≤ z, more preferably satisfies 0.9 ≤ z, and preferably satisfies z ≤ 1.4, more preferably satisfies z ≤ 1.3.

As shown in the following General Formula (2), the scintillator represented by General Formula (1) may contain another element A (also referred to as "activator element A") as an activator other than Q, M, O, and Zr. For example, the scintillator may contain one or more selected from the group consisting of elements including rare earths and transition metals, such as Ce, Pr, Nd, Eu, Tb, and Yb. From the viewpoint of obtaining a short fluorescence decay time, the scintillator preferably contain Ce.

QₓM_{y}O_{3z}:A ... (2)

The conditions for Q, M, x, y, and z in the General Formula (2) are the same as in the General Formula (1).

The activator element A may be present in any mode in the scintillator. For example, the activator element A may be included in one of Q and M, or may be included in both of Q and M.

The content of the activator element A is not limited. For example, the content of the activator element A with respect to the total of the scintillator is usually 1.0% by mass or less, more preferably 0.5% by mass or less, still more preferably 0.2% by mass or less, or may be 0.1% by mass or less, and greater than any lower limit. For example, in cases where the other element A is included in Q, the content of the activator element A with respect to the total of Q is usually 0.01 mol% to 5 mol%, and preferably 0.1 mol% to 2 mol%. In cases where the other element A is included in M, the content of the activator element A with respect to the total of M is usually 0.001 mol% or more, and is usually 5 mol% or less, preferably 1 mol% or less, more preferably 0.1 mol% or less. The content is preferably as low as possible. By containing an appropriate amount of the element as an activator, a higher fluorescence intensity can be achieved.

The scintillator represented by General Formula (1) may contain Al as an impurity. The Al content in the scintillator is usually 1,500 ppm by mass or less, preferably 1200 ppm by mass or less, more preferably 1,000 ppm by mass or less, still more preferably 800 ppm by mass or less, 500 ppm by mass or less, 200 ppm by mass or less, or 100 ppm by mass or less. There is no lower limit of the Al content, and Al does not necessarily need to be included. However, from the viewpoint of the fact that Al may be included as an impurity, the Al content is usually 1 ppm by mass or more. In cases where the Al content is within the above-described range, a scintillator showing good light transmittance can be obtained.

Al may be present in any mode in the scintillator. For example, similarly to the above-described activator, Al may be included in one of Q and M, or may be included in both of Q and M. In other words, one or both of Q and M may include a site substituted with Al.

In cases where the Al content in the scintillator is too high, the light emission property tends to be deteriorated, and a preferred light transmittance tends not to be obtained in the sintered body.

The Al content can be adjusted by controlling the amount of Al (or an Al compound) that may be added as a raw material. In cases where Al is contained as an impurity in a raw material other than the Al (or the Al compound), the content may be adjusted by controlling the purity of the raw material, or by combination of the selection of the amount of the Al (or the Al compound) added and the selection of the raw material, or by reducing the Al content by a common method for removing impurities.

Since contamination with Al may occur from a device or an apparatus, or from the ambient environment during the production, the adjustment to a preferred Al content may also be carried out, for example, by avoiding use of a device or an apparatus that may contain Al or that was used for treating Al, or by avoiding an environment that may cause the contamination with Al, or by arbitrary combination of these, in the production process.

The scintillator represented by General Formula (1) may contain Mg as an impurity. The Mg content in the scintillator is 100 ppm by mass or less, preferably 90 ppm by mass or less, more preferably 80 ppm by mass or less, still more preferably 60 ppm by mass or less, 40 ppm by mass or less, 20 ppm by mass or less, or 10 ppm by mass or less. There is no lower limit of the Mg content, and Mg does not necessarily need to be contained. However, from the viewpoint of the fact that it may be contained as an impurity, the Mg content is usually 1 ppm by mass or more. In cases where the Mg content is within the above-described range, a scintillator showing good light transmittance can be obtained.

Mg may be present in any mode in the scintillator. For example, similarly to the above-described activator, Mg may be included in one of Q and M, or may be included in both of Q and M. In other words, one or both of Q and M may include a site substituted with Mg.

In cases where the Mg content in the scintillator is too high, the light emission property tends to be deteriorated, and a preferred light transmittance tends not to be obtained in the sintered body.

The Mg content can be adjusted by controlling the amount of Mg (or a Mg compound) that may be added as a raw material. In cases where Mg is contained as an impurity in a raw material other than the Mg (or the Mg compound) , the content may be adjusted by controlling the purity of the raw material, or by combination of the selection of the amount of the Mg (or the Mg compound) added and the selection of the raw material, or by reducing the Mg content by a common method for removing impurities.

Since contamination with Mg may occur from a device or an apparatus, or from the ambient environment during the production, the adjustment to a preferred Mg content may also be carried out, for example, by avoiding use of a device or an apparatus that may contain Mg or that was used for treating Mg, or by avoiding an environment that may cause the contamination with Mg, or by arbitrary combination of these, in the production process.

The scintillator represented by General Formula (1) may also contain another element as long as the effect of the present invention is not deteriorated.

The method of analyzing the elements contained in the scintillator is not limited. The analysis may be carried out by, for example, a total element analysis method using glow-discharge mass spectrometry (GDMS).

The form of the scintillator is not limited, and may be appropriately selected in accordance with various uses and purposes. For example, the scintillator may be in the form of any of a powder, single crystal, polycrystal, and sintered body, especially in the form of any of a powder, single crystal, and sintered body. Among these, the scintillator is preferably not in the form of a powder. The scintillator is preferably a single crystal or a block of a sintered body. For example, in cases where the scintillator is used for a PET apparatus, the scintillator is preferably a single crystal, or a block of a sintered body. In cases where the scintillator is used for an X-ray CT apparatus, the scintillator is preferably a single crystal, or a block of a sintered body. In cases where the scintillator is used for an X-ray detection film for a nondestructive test, the scintillator is preferably used as a film prepared by dispersing the powder in a resin sheet.

In cases where the scintillator is used in the form of a block, its shape is not limited. The block preferably has a radiation incidence surface and an emitting surface, and a certain height is preferably present between the radiation incidence surface and the emitting surface. The radiation incidence surface and the emitting surface are preferably in parallel.

The shape of the block is preferably a columnar shape, flat plate shape, or curved plate shape.

The height of the block shape is usually 0.5 mm or more, preferably 1 mm or more, more preferably 3 mm or more, still more preferably 5 mm or more, especially preferably 10 mm or more, still especially preferably 15 mm or more. There is no upper limit of the height, and the height may be appropriately set in accordance with the apparatus, device, or the like that utilizes the scintillator. The height is usually 100 mm or less. The "height" in the flat plate shape or curved plate shape means the thickness.

The fluorescence decay time of the scintillator is not limited. It may be measured by the same method under the same conditions as in the measurement of the fluorescence decay time in the Examples below. As measured by this method, the fluorescence decay time of the scintillator is usually 20 ns or less, preferably 18 ns or less, more preferably 14 ns or less, still more preferably 11 ns or less.

The scintillator is preferably capable of being excited by irradiation with ionizing radiation to cause light emission within the wavelength range of 160 nm to 700 nm. The scintillator preferably has an emission peak within the range of 300 nm to 500 nm. Examples of the ionizing radiation include X-ray, γ-ray, α-ray, and neutron ray.

Upon irradiation of the scintillator with γ-ray, the fluorescence intensity 100 ns after the time when the fluorescence intensity reaches the maximum value is usually 4% or less, preferably 3% or less, more preferably 2% or less, and is usually 0% or more, but is not limited to the lower limit, when the maximum value of fluorescence intensity is taken as 100% . The lower the fluorescence intensity 100 ns after the fluorescence intensity reaches the maximum value, the more rapid the fluorescence decay of the scintillator. In cases where the fluorescence intensity is the above upper limit or less, a sufficiently short fluorescence decay time can be secured.

The fluorescence intensity may be measured by the method described in the Examples below.

The scintillator is preferably not deliquescent. By using a scintillator having a composition satisfying General Formula (1), a non-deliquescent scintillator can be obtained.

The scintillator usually has an effective atomic number (Z_{eff}) of 50 or more. The effective atomic number is preferably 53 or more, more preferably 56 or more, and still more preferably 60 or more. The upper limit of the effective atomic number is usually 100 or less, but is not limited thereto. In cases where the effective atomic number of the scintillator is within the range described above, a scintillator having a high radiation stopping power can be obtained.

The scintillator has a density of usually 5.5 g/cm³ or more, preferably 6.0 g/cm³ or more, more preferably than 6.5 g/cm³ or more, still more preferably 7.0 g/cm³ or more, and most preferably 7.5 g/cm³ or more. The upper limit of the density is usually 20 g/cm³ or less, but is not limited thereto. In cases where the density is within the range described above, a scintillator having a high radiation stopping power can be obtained. The scintillator density may be measured by the method described in Examples below.

### <Method of Producing Scintillator>

The method of producing the scintillator (also referred to as the "present production method") is not limited. Examples of the method include a method including:
a raw material mixing step of weighing and sufficiently mixing raw materials such that a composition of interest is obtained, to obtain a raw material mixture; and a synthesis step of filling a heat-resistant container with the obtained raw material mixture and subjecting the raw material mixture to heat treatment at a predetermined temperature in a predetermined atmosphere to obtain a synthetic powder; the method preferably further including:
   a pressure molding step of pressure-molding the obtained synthetic powder to obtain a pressure-molded body; and
   a firing step of firing the obtained pressure-molded body at a predetermined temperature in a predetermined atmosphere, and, when necessary, processing and washing the fired product, to obtain a sintered body. An example of the method of producing a scintillator is described below.

### [Raw Material Providing Step]

The method of producing a scintillator may include a step of providing raw materials (raw material providing step). The raw materials used are not limited as long as the scintillator described above can be produced. For example, an oxide, a halide, an inorganic acid salt, and/or the like of each constituting atom may be used.

Concerning Ba, for example, BaCO₃ may be used, and the purity of the BaCO₃ is usually 90 mol% or more, preferably 99 mol% or more, and on the other hand, the upper limit of the purity is not limited.

Concerning Ca, for example, CaCO₃ may be used, and the purity of the CaCO₃ is usually 90 mol% or more, preferably 99 mol% or more, and on the other hand, the upper limit of the purity is not limited.

Concerning Sr, for example, SrCO₃ may be used, and the purity of the SrCO₃ is usually 90 mol% or more, preferably 99 mol% or more, and on the other hand, the upper limit of the purity is not limited.

Concerning Hf, for example, HfO₂ may be used as a raw material, and the purity of HfO₂ in the raw material is usually 99.999 mol% or less, preferably 99.9 mol% or less, more preferably 99.0 mol% or less, and is usually 90 mol% or more. In cases where the purity is too high, sintering does not proceed, leading to low light transmittance in some cases. In cases where the purity is too low, the luminescence decay time is long, which is not preferred. By using HfO₂ having the purity described above, a less expensive raw material can be used, so that the scintillator can be produced at low cost.

Concerning Zr, Zr contained in a small amount as an impurity in a raw material such as HfO₂ may be used as it is, or a Zr compound may be separately added. The Zr compound is not limited, and ZrO₂, Zr₂O₃, and/or the like may be used. The Zr content in the HfO₂ is usually 100 ppm by mass or more, preferably 500 ppm by mass or more, more preferably 1,000 ppm by mass or more, still more preferably 1,500 ppm by mass or more, and is usually 10% by mass or less, may be 50,000 ppm by mass or less, may be 30,000 ppm by mass or less, may be 21,000 ppm by mass or less, may be 18,000 ppm by mass or less, or may be 10,000 ppm by mass or less, but is not limited thereto. In cases where Zr contained as an impurity in a raw material is used, the Zr content tends to decrease as the purity of the raw material increases. However, the purity of the raw material is not completely linked to the Zr contained as an impurity, and the content may vary depending on the type of the raw material and the production process. For example, in some cases, the purity is high, and the content of Zr contained as an impurity is low. In other cases, the purity is high, and the content of Zr contained as an impurity is high.

Concerning Ce, for example, CeO₂, CeI₃, Ce₂O₃, Ce(NO₃)₃, or the like may be used, and the purity of the raw material is usually 90 mol% or more, preferably 99 mol% or more, and on the other hand, the upper limit of the purity is not limited.

Concerning Al, for example, Al₂O₃ may be used, and the purity of the Al₂O₃ is usually 90 mol% or more, preferably 99 mol% or more, and on the other hand, the upper limit of the purity is not limited. Al may be contained in a small amount as an impurity in each raw material other than the Al (or the Al compound) . Since the Al content in each raw material (excluding the Al or Al compound) is usually from 1 ppm by mass or less to about several ten ppm by mass, the amount of Al contained in the raw material mixture after the mixing of the raw materials can be kept sufficiently low by selecting appropriate raw materials.

Concerning Mg, for example, 3MgCO₃ ·Mg(OH)₂ · 3H₂O may be used, and the purity of the 3MgCO₃ ·Mg(OH)₂ ·3H₂O is usually 90 mol% or more, preferably 99 mol% or more, and on the other hand, the upper limit of the purity is not limited. Mg may be contained in a small amount as an impurity in each raw material other than the Mg (or the Mg compound). The Mg content in each raw material (excluding the Mg or Mg compound) is usually from 1 ppm by mass or less to about several ppm by mass. The amount of Mg contained in the raw material mixture after the mixing of the raw materials can be kept sufficiently low by selecting appropriate raw materials

### [Raw Material Mixing Step]

The present production method may include a step of mixing raw materials to obtain a raw material mixture (raw material mixing step). The method of mixing the raw materials is not limited, and methods commonly used may be applied. Examples of the method include the dry blending method and the wet blending method.

Examples of the dry blending method include blending using a ball mill or the like.

Examples of the wet blending method include a method of adding a solvent such as water or a dispersion medium is to the raw materials, mixing the resulting mixture using a mortar and a pestle to prepare a mixture in the form of a dispersion or a slurry, and then by drying the mixture by spray drying, heat drying, natural drying, or the like.

### [Synthesis Step]

The present production method may include a step of subjecting the raw material mixture to heat treatment to obtain a synthetic powder (synthesis step). By filling a heat-resistant container such as a crucible or tray with the raw material mixture, and subjecting the raw material mixture to heat treatment, a synthetic powder can be obtained. The material of the heat-resistant container is not limited as long as the material has low reactivity with each raw material. Examples of the container include platinum-based containers such as Pt-, Pt/Rh (30 wt%)-, or Ir-based containers. The atmosphere during the heat treatment is not limited, and examples of the atmosphere include reducing atmospheres such as a hydrogen atmosphere and a hydrogen-noble gas mixed atmosphere; and an air atmosphere. In cases where the heat treatment is carried out in a reducing atmosphere, a container such as a Mo- or W-based container may be used as well as a platinum-based container.

The temperature and the time of the heat treatment are not limited as long as the scintillator can be obtained. The temperature and the time are preferably those which allow sufficient reaction of the raw materials mixed. The heat treatment temperature is usually 900°C or more, preferably 1,000°C or more, and is usually 2,000°C or less, preferably 1, 800°C or less. The time is usually 1 hour or more, preferably 3 hours or more, and is usually 50 hours or less.

The synthetic powder obtained by the present synthesis step may be used for obtaining a sintered body by the later-described pressure molding step, pre-firing step, firing step, and/or the like, or may be used as it is as a powder scintillator.

By confirming whether or not the composition of the synthetic powder satisfies a preferred range before obtaining the sintered body by the later-described steps, the composition of the sintered body can be more securely adjusted to within a preferred range.

The synthetic powder obtained by the present synthesis step may be subjected to sieving. The mesh size (opening) of the sieve is usually 500 µm or less, preferably 200 µm or less. By the sieving, aggregation of the powder can be eliminated to obtain a scintillator having a uniform quality.

### [Pressure Molding Step]

The present production method may include a step of pressure-molding the synthetic powder obtained in the synthesis step, to obtain a pressure-molded body (pressure molding step) . The method and conditions of the pressure molding are not limited. The pressure molding may be carried out by, for example, uniaxial pressing or cold isostatic pressing. The pressure during the pressure molding is, for example, 10 MPa or more, or may be preferably 30 MPa or more. By appropriately carrying out the pressure molding, the voids after the sintering can be reduced, and the light transmittance can hence be improved. Further, since the density after the sintering can be improved, a scintillator having a high radiation stopping power can be obtained.

### [Pre-Firing Step]

The present production method may include a step of pre-firing the synthetic powder obtained by the synthesis step or the pressure-molded body obtained by the pressure molding step, to obtain a pre-fired product (pre-firing step). The temperature, pressure, time, and atmosphere in the pre-firing are not limited as long as the scintillator can be obtained. The pre-firing temperature is usually 1,200°C or more, preferably 1,300°C or more, and is usually 2,000°C or less, preferably 1,800°C or less. The pre-firing pressure is usually 10⁻⁵ Pa or more, preferably 10⁻³ Pa or more, and is usually 10 MPa or less, preferably 2 MPa or less. The pre-firing time is usually 1 hour or more, preferably 2 hours or more, and is usually 50 hours or less. The atmosphere is preferably an inert atmosphere such as an argon atmosphere or a nitrogen atmosphere.

### [Firing Step]

The present production method may include a step of further heating (firing) the synthetic powder obtained by the synthesis step, the pressure-molded body obtained by the pressure molding step, or the pre-fired product obtained by the pre-firing step, under pressure to obtain a fired product (sintered body) (firing step) . The method and conditions of the pressurization are not limited. The pressurization may be carried out by, for example, the hot isostatic pressing method (HIP) . Before the firing, a hot press process may be introduced.

The conditions during the firing are not limited as long as the scintillator can be obtained. The firing temperature is usually 1,200°C or more, preferably 1,300°C or more, and is usually 2,000°C or less, preferably 1,800°C or less. The firing pressure is usually 10 MPa or more, preferably 50 MPa or more, and is usually 300 MPa or less, preferably 200 MPa or less. The firing time is usually 0.5 hour or more, preferably 1 hour or more, and is usually 20 hours or less, preferably 10 hours or less. By appropriately adjusting the temperature, pressure, and time, the density after the sintering can be improved, so that a scintillator having a high radiation stopping power can be obtained.

The atmosphere during the firing is not limited as long as the scintillator can be obtained. The firing is preferably carried out in an appropriate atmosphere taking into account the stability of the materials, reaction container, furnace material, and the like. Specific examples of the atmosphere include inert atmospheres such as an argon atmosphere and a nitrogen atmosphere.

The firing step may arbitrarily include, for example, a pretreatment step (a step of carrying out washing, drying, vacuum degassing, and/or the like), a post-treatment step (a step of carrying out washing, drying, and/or the like), or the like.

### [Annealing Step]

In cases where the scintillator is obtained as a sintered body in the present production method, the fired product obtained by the firing step may be used as it is as the sintered body. Alternatively, the method may include a step of annealing the fired product (annealing step) for the purpose of repairing crystal defects after the firing step. By carrying out the annealing, the light absorption due to the crystal defects can be reduced, so that a sintered body having higher light transmittance can be obtained.

Conditions in the annealing step, such as the temperature, pressure, time, and atmosphere are not limited as long as the scintillator can be obtained. The annealing temperature is usually 1,000°C or more, preferably 1,200°C or more, and is usually 1,500°C or less. The annealing pressure is usually 10 MPa or more, preferably 20 MPa or more, and is usually 300 MPa or less, preferably 200 MPa or less. The annealing time is usually 0.5 hour or more, preferably 1 hour or more, and is usually 20 hours or less, preferably 10 hours or less. The atmosphere is preferably an inert atmosphere such as an argon atmosphere or a nitrogen atmosphere.

### [Single-Crystal Growing Step]

In cases where the scintillator is to be obtained as a single crystal, for example, the sintered body obtained by the firing step or the annealing step may be melted by heating to allow single-crystal growth from the melt, to prepare the single crystal. The container and the atmosphere for the preparation of the single crystal may be appropriately selected from the same point of view as in the production of the sintered body. The method of the single-crystal growth is not limited, and a common method such as the Czochralski method, Bridgman method, micro-pull-down method, EFG method, or zone melting method may be used. For the purpose of lowering the melting point, the flux method or the like may also be used. In cases where a large-sized crystal is to be grown, the Czochralski method or the Bridgman method is preferred.

The method of obtaining the scintillator as a powder is not limited. Examples of the method include a method in which the synthetic powder obtained by the synthesis step is provided as it is as a powder scintillator, a method in which the sintered body obtained by the firing step or the annealing step is pulverized, and a method in which the single crystal obtained by the single-crystal growing step is pulverized. The method of the pulverization is not limited.

### <Use of Scintillator>

The use of the scintillator is not limited. The scintillator may preferably be used for a radiation detector. The radiation detector may be used in the fields of, for example, radiology for positron CT (PET) for medical diagnosis, cosmic-ray observation, underground resource exploration, and the like; physics; physiology; chemistry; mineralogy; and also petroleum exploration.

In cases of the use for a radiation detector, the form of the scintillator is not limited. The scintillator may be in the form of any of a powder, single crystal, and sintered body. The scintillator can be used as a radiation detector when it is combined with a photodetector. Examples of the photodetector used in the radiation detector include a position-sensitive photoelectron multiplier tube (PS-PMT), a silicon photomultiplier (Si-PM), a photodiode (PD), and an avalanche photodiode (APD).

The radiation detector including the scintillator can be used also as a radiation inspection apparatus. Examples of the radiation inspection apparatus including the radiation detector include inspection apparatuses for nondestructive tests, such as a detector for nondestructive tests, a detector for resource exploration, and a detector for high-energy physics; and diagnostic devices such as a medical image processor. Examples of the medical image processor include positron emission tomography (PET) apparatuses, X-ray CT, and SPECT. Examples of the form of the PET include two-dimensional PET, three-dimensional PET, time-of-flight (TOF) PET, and depth-of-interaction (DOI) PET. These may also be used in combination.

### EXAMPLES

The present invention is described below in more detail by way of Examples. However, the present invention is not limited to the following Examples.

### <Example 1>

As raw materials for Ba, Sr, Ce, and Hf elements, BaCO₃ (purity, 99.99 mol%), SrCO₃ (purity, 99.9 mol%), CeO₂ (purity, 99.99 mol%), and HfO₂ (purity, 99.7 mol%; containing Zr as an impurity; Zr content in HfO₂, 2,800 ppm by mass) were provided. The raw materials were mixed such that the molar ratio among the elements in terms of Ba: Sr: Ce: Hf was 0.75:0.25:0.01:1.00, to obtain a raw material mixture in a powder form. The obtained raw material mixture was subjected to heat treatment in an air atmosphere at 1,150°C for 12 hours to obtain a synthetic powder (powder scintillator). The obtained synthetic powder was passed through a sieve having an opening of 106 µm, to provide a raw material of a sintered-body scintillator. The obtained raw material was subjected to uniaxial pressing at 40 MPa for 1 minute and cold isostatic pressing at 170 MPa for 1 minute, to obtain a pressure-molded body. The obtained pressure-molded body was retained at 1,600°C under nitrogen flow (1 L/min) for 6 hours to carry out pre-firing. Finally, firing was carried out in a nitrogen atmosphere by the hot isostatic pressing method (HIP) at a temperature of 1,600°C at a pressure of 100 MPa for 2 hours, to obtain a sintered-body scintillator A having a composition represented by the above General Formula (1).

### <Examples 2 and 3, and Comparative Examples 1 to 3>

Sintered-body scintillators B to F having compositions represented by the above General Formula (1) were obtained in the same manner as in Example 1 except that CaCO₃ (purity, 99.99 mol%) was used when necessary as a Ca raw material, and that the raw materials were mixed such that the molar ratio among the elements in terms of Ba: Sr: Ca: Ce: Hf was as described in Table 1.

### <Evaluation of Scintillators>

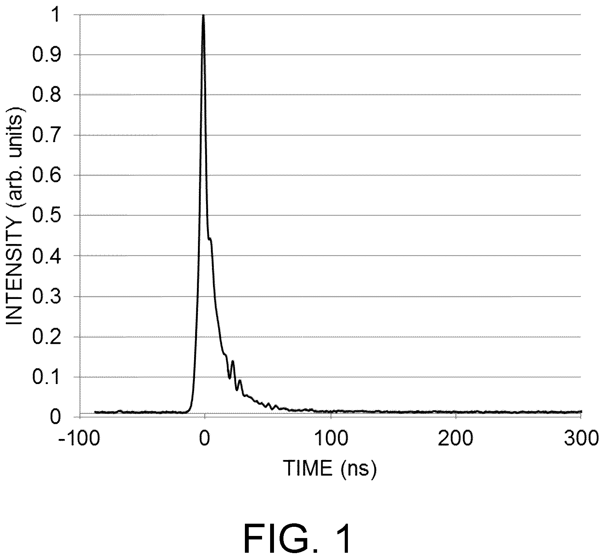

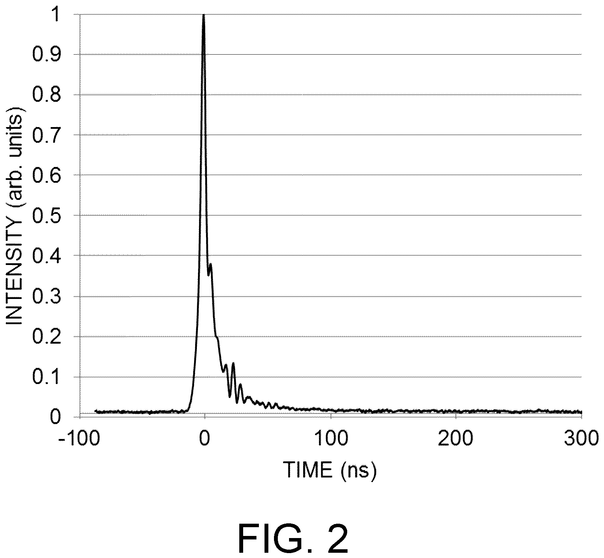

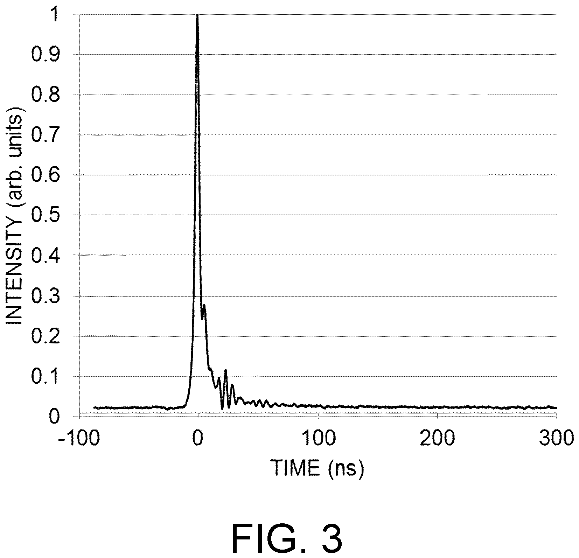

The fluorescence decay time (DT) was evaluated for the sintered-body scintillators A to F. A sample having a thickness of 1.6 mm was covered with a Teflon (registered trademark) tape, and then the sample was attached to an H7195 photoelectron multiplier tube manufactured by Hamamatsu Photonics K. K. using OPTSEAL, manufactured by Shin-Etsu Chemical Co., Ltd. The sample was irradiated with γ-ray using Cs-137 as an excitation source, and the fluorescence intensity was measured during the γ-ray irradiation and after the irradiation, using an MSO54 5-BW-1000 oscilloscope manufactured by Tektronix, Inc. Based on the fluorescence intensities, fitting was carried out using a single exponential function, to calculate the fluorescence decay time (DT). The ratio of the fluorescence intensity 100 ns after the time when the fluorescence intensity reached the maximum value was calculated taking the maximum value of the fluorescence intensity as 100%. The results are shown in Table 1. The fluorescence decay waveforms of the sintered-body scintillators A to C obtained in Examples 1 to 3 are shown in Figs. 1 to 3, respectively.

### <Measurement of Scintillator Density>

The scintillators A to F were air-dried at room temperature, and subjected to measurement of the density using a balance (AUW220D, manufactured by Shimadzu Corporation) and a specific gravity measurement kit (SMK-401, manufactured by Shimadzu Corporation) in an environment at room temperature. The results are shown in Table 1.

### [Table 1]

**Table 1**

| | Ba:Sr:Ca:Ce:Hf molar ratio upon mixing of raw materials | | | | | Fluorescence decay time (DT) (ns) | Fluorescence intensity at 100 ns (%)* | Effective atomic number (Z_{eff}) | Density (g/cm³) |
|---|---|---|---|---|---|---|---|---|---|
| | Ba | Sr | Ca | Ce | Hf | | | | |
| Example 1 | 74.3 | 24.7 | 0 | 1 | 100 | 11.4 | 1.30 | 64 | 7.90 |
| Example 2 | 49.5 | 49.5 | 0 | 1 | 100 | 10.4 | 1.90 | 64 | 7.79 |
| Example 3 | 49.5 | 0 | 49.5 | 1 | 100 | 11.2 | 2.77 | 64 | 7.59 |
| Comparative Example 1 | 99 | 0 | 0 | 1 | 100 | 14.2 | 1.47 | 64 | 8.27 |
| Comparative Example 2 | 0 | 99 | 0 | 1 | 100 | 25.9 | 6.22 | 63 | 7.45 |
| Comparative Example 3 | 0 | 0 | 99 | 1 | 100 | 21.8 | 3.25 | 65 | 6.73 |

| | | | | | | | | | |
|---|---|---|---|---|---|---|---|---|---|
| * The ratio (%) of the fluorescence intensity 100 ns after the time when the fluorescence intensity reached the maximum value, relative to the maximum value of the fluorescence intensity, which is taken as 100%. | | | | | | | | | |

As shown in Table 1, the scintillators of Examples showed fluorescence decay times shorter than those of Comparative Examples. Moreover, all scintillators of Examples had an effective atomic number of as high as 64, and densities of as high as 7.5 or more.

As described above, the present invention can provide a scintillator having a high radiation stopping power, and having an even shorter fluorescence decay time compared to conventional scintillators.

Further, according to the present invention, an inexpensive low-purity Hf raw material can be used, so that a scintillator whose production cost is low, the scintillator having a high radiation stopping power, and having a shorter fluorescence decay time compared to conventional scintillators, can be provided.

## Claims

1. A scintillator represented by General Formula (1):
QₓM_{y}O_{3z} ... (1)
wherein in General Formula (1), Q comprises at least two or more divalent metallic elements; M comprises at least Hf; and x, y, and z independently satisfy 0.5 < x < 1.5, 0.5 < y < 1.5, and 0.7 < z < 1.5, respectively.

2. The scintillator according to claim 1, wherein Q comprises one or more elements selected from Ba, Sr, and Ca.

3. The scintillator according to claim 1, wherein Q comprises at least Ba.

4. The scintillator according to claim 1 or 2, wherein Q comprises two or more elements selected from Ba, Sr, and Ca.

5. The scintillator according to claim 1, wherein Q comprises two divalent metallic elements Q1 and Q2, and wherein the molar ratio between Q1 and Q2 is within the range of 20:80 to 80:20.

6. The scintillator according to claim 1, wherein Q comprises one or more selected from the group consisting of Ba, Ca, and Sr, and wherein the total ratio of Ba, Ca, and Sr in the total of Q is 50 mol% or more.

7. The scintillator according to any one of claims 1 to 6, wherein the ratio of Hf in the total of M is 40 mol% or more.

8. The scintillator according to any one of claims 1 to 7, wherein the scintillator further comprises one or more elements selected from the group consisting of Ce, Pr, Nd, Eu, Tb, and Yb as an activator(s).

9. The scintillator according to any one of claims 1 to 8, wherein the scintillator is a single crystal or a block of a sintered body.

10. The scintillator according to any one of claims 1 to 9, wherein the scintillator has a columnar shape, flat plate shape, or curved plate shape, and has a height of 1 mm or more.

11. The scintillator according to any one of claims 1 to 10, wherein the scintillator has a fluorescence decay time of 14 ns or less.

12. The scintillator according to any one of claims 1 to 11, wherein the scintillator has a fluorescence decay time of 11 ns or less.

13. The scintillator according to any one of claims 1 to 12, wherein, upon irradiation with γ-ray, the fluorescence intensity 100 ns after the time when the fluorescence intensity reaches the maximum value is 3% or less when the maximum value of fluorescence intensity is taken as 100%.

14. A radiation detector, comprising the scintillator according to any one of claims 1 to 13.

15. A radiation inspection apparatus comprising a radiation detector,
wherein the radiation detector comprises the scintillator according to any one of claims 1 to 13.

16. A method of producing a scintillator, comprising:
a raw material mixing step of mixing raw materials to obtain a raw material mixture; and
a synthesis step of subjecting the raw material mixture to heat treatment to obtain a synthetic powder;
wherein the raw materials comprise at least HfO₂ having a purity of 99.0 mol% or more, and
wherein the scintillator is a scintillator represented by General Formula (1):
QₓM_{y}O_{3z} ... (1)
wherein in General Formula (1), Q comprises at least two or more divalent metallic elements; M comprises at least Hf; and x, y, and z independently satisfy 0.5 < x < 1.5, 0.5 < y < 1.5, and 0.7 ≤ z ≤ 1.5, respectively.

17. The method of producing the scintillator according to claim 16, further comprising:
a pressure molding step of pressure-molding the synthetic powder to obtain a pressure-molded body; and
a firing step of firing the pressure-molded body to obtain a fired product.

18. The method of producing the scintillator according to claim 16, further comprising:
a pressure molding step of pressure-molding the synthetic powder to obtain a pressure-molded body;
a firing step of firing the pressure-molded body to obtain a fired product; and
an annealing step of annealing the fired product after the firing step.
